# EUROPÄISCHE PATENTSCHRIFT

(11) **EP 4 630 229 B1**
(45) Veröffentlichungstag und Bekanntmachung des Hinweises auf die Patenterteilung: **11.03.2026**
(21) Anmeldenummer: 24702095.1
(22) Anmeldetag: 24.01.2024
(51) Int. Cl.: B29C 70/72, B29C 70/84, B29D 99/00, H01B 19/00, H02G 3/22, B60R 16/02

(54) **VERFAHREN ZUR ANBRINGUNG EINER TÜLLE AN EINEM LEITUNGSSTRANG SOWIE LEITUNGSSTRANG MIT TÜLLE**
METHOD FOR ATTACHING A BUSHING TO A PIPE STRAND AND PIPE STRAND HAVING BUSHING
PROCÉDÉ DE FIXATION D'UNE DOUILLE À UN BRIN DE TUYAU ET BRIN DE TUYAU COMPORTANT UNE DOUILLE

(30) Priorität: 10.02.2023 DE 102023201120
(43) Veröffentlichungstag der Anmeldung: 15.10.2025
(73) Patentinhaber: LEONI Wiring Systems Slovakia spol. s r.o., 911 01 Trencin (SK)
(72) Erfinder: HORNACEK, Tomas, 911 08 Trencin (SK); MIKUSOVA, Miroslava, 018 52 Pruske (SK)
(74) Vertreter: FDST Patentanwälte
(86) Internationale Anmeldenummer: PCT/EP2024/051679
(87) Internationale Veröffentlichungsnummer: WO 2024/165320

(56) Entgegenhaltungen:
- JP-A- H0 636 604
- JP-A- H06 333 433
- US-A- 2 892 013

## Beschreibung

Die Erfindung betrifft ein Verfahren zur Anbringung einer Tülle an einem Leitungsstrang sowie einen Leitungsstrang mit einer daran angebrachten Tülle.

Tüllen werden allgemein zum Abdichten eines Leitungsstrangs bei Wanddurchführungen eingesetzt. Speziell im Fahrzeugbereich werden Tüllen beispielsweise bei einer Wanddurchführung von einem Nassraum zu einem Trockenraum eingesetzte. Ein wesentlicher Aspekt hierbei ist häufig eine zuverlässige Sicherstellung einer Längsabdichtung.

Tüllen werden regelmäßig durch einen Gießprozess hergestellt, bei dem der Leitungsstrang zur Ausbildung eines Tüllenkörpers und unter Verwendung einer Gussform von einem Gussmaterial umgeben wird. Ein häufig eingesetztes Material hierfür ist beispielsweise Polyurethan (PUR). Dies ist bei der Verarbeitung sehr dünnflüssig, sodass bereits beim Gießen eine Abdichtung der Gussform erforderlich ist. Insbesondere ist eine Längsabdichtung auch beim Gießprozess wünschenswert.

Aus der DE 10 2015 220 318 A1 ist eine Tülle zu entnehmen, welche eine harte Außenschale aus zwei Schalenhälften als Gussform aufweist, welche mit dem Gussmaterial zur Ausbildung eines Tüllenkörpers ausgefüllt ist. Die Außenschale bildet daher eine bleibende Gussform, die Teil der Tülle ist. Für eine Abdichtung beim Gießprozess sind zusätzliche Dichtelemente vorgesehen, die am Außenumfang des Leitungsstrangs beispielsweise als Dichtstreifen, Dichtband oder auch als Dichtmasse angebracht werden. Hierzu werden sie beispielsweise in die Schalenhälften eingelegt und überlappen sich gegenseitig im zusammengefügten Zustand.

Aus JP H06 36604 A ist eine Tülle zu entnehmen, zu deren Ausbildung zunächst ein Einlegeteil in eine Gussform eingelegt wird, und anschließend eine Gussmasse eingegossen wird, welches zusammen mit dem Einlegeteil die Tülle ausbildet, wobei das Einlegeteil und ein durch die eingegossene Gussmasse ausgebildetes Teil unterschiedliche Härten aufweisen.

Weitere Tüllen sind beispielsweise aus US 2892013 A sowie aus JP H06333433 A zu entnehmen.

Ausgehend hiervon liegt der Erfindung die Aufgabe zugrunde, eine zuverlässige und sichere Abdichtung eines Leitungsstrangs bei geringem Montageaufwand zu gewährleisten.

Die Aufgabe wird gemäß der Erfindung gelöst durch ein Verfahren zur Anbringung einer Tülle an einem sich in einer Axialrichtung erstreckenden Leitungsstrang mit mehreren Einzelleitungen sowie durch einen Leitungsstrang mit einer daran angebrachten Tülle.

Das Verfahren weist dabei folgende Schritte auf:
- Anbringen einer Gussform um den Leitungsstrang, wobei die Gussform einen Hauptraum sowie in Axialrichtung daran angrenzend zumindest einen Ringkanal aufweist, sowie weiterhin in einem zweistufigen Gussverfahren
- Ausbildung eines Dichtelements mit Hilfe eines ersten Dichtmaterials, welches in einem ersten Gießschritt in den Ringkanal der Gussform eingebracht wird,
- nachfolgendes Füllen das Hauptraums und Ausbilden eines Tüllenkörpers durch Einbringen eines zweiten Dichtmaterials in die Gussform bei einem zweiten Gießschritt, wobei das zuvor ausgebildete Dichtelement eine Längsabdichtung für das zweite Dichtmaterial bewirkt.

Der mit der Tülle versehene Leitungsstrang weist erfindungsgemäß entsprechend zumindest ein an den Leitungsstrang gegossenes Dichtelement aus einem ersten Dichtmaterial und einen an den Leitungsstrang gegossenen Tüllenkörper aus einem zweiten Material auf, welcher sich in Axialrichtung des Leitungsstrangs an das Dichtelement anschließt.

Hervorzuheben ist hierbei das zweistufige Gussverfahren, bei dem in einer ersten Stufe (erster Gießschritt) das zumindest eine Dichtelement ausgebildet wird und erst anschließend in einer zweiten Stufe (zweiter Gießschritt) der eigentliche Tüllenkörper ausgebildet wird. Dies bedeutet, dass in die um den Leitungsstrang angebrachte Gussform im ersten Gießschritt zunächst das erste Dichtmaterial in den Ringkanal eingegossen wird und das Dichtelement durch zumindest teilweises Aushärten ausgebildet wird und erst anschließend - insbesondere ohne, dass die Gussform geöffnet wird - das zweite Dichtmaterial zur Ausbildung des Tüllenkörpers in einem zweiten Gießschritt in den Hauptraum eingegossen wird. Durch die zeitlich vorgelagerte Ausbildung des Dichtelements wird bereits eine Abdichtfunktion erreicht, sodass beim nachfolgenden Gießen des Tüllenkörpers eine Abdichtung für das zweite Dichtmaterial erreicht ist, sodass dessen Fließen in Längsrichtung durch das Dichtelement zumindest behindert ist.

Bei der fertiggestellten Tülle äußert sich dies unter anderem darin, dass zum einen das erste Dichtmaterial des Dichtelements in Zwischenräume zwischen Einzelleitungen des Leitungsstrangs eingedrungen ist. Ein Leitungsstrang besteht typischerweise aus einer Vielzahl von Einzelleitungen, die zudem häufig auch in mehreren Lagen angeordnet sind. Der Leitungsstrang ist daher insbesondere durch ein Leitungsbündel von Einzelleitungen gebildet. Bei den Einzelleitungen handelt es sich beispielsweise um jeweils einzelne Adern (zentraler Leiter, welcher von einem Adermantel umgeben ist). Bevorzugt ist das erste Dichtmaterial über mehrere Lagen von Einzelleitungen hinweg in das Innere des Leitungsstrangs eingedrungen. **In** weiter bevorzugter Ausgestaltung sind die Prozessparameter derart gewählt, dass das erste Dichtmaterial den Leitungsstrang in radialer Richtung vollständig durchdringt, sodass eine vollständige Abdichtung in Axialrichtung erreicht ist.

Dieses zweistufige Gussverfahren ist insbesondere für dicke Leitungsstränge, insbesondere Leitungsbündel von Vorteil. Hierunter werden Leitungsstränge verstanden, die einen Durchmesser von zumindest 14 mm, insbesondere von zumindest 18 mm oder auch von zumindest 25 mm oder von zumindest 40 mm aufweisen. Bevorzugt werden daher derartig dicke Leitungsstränge eingesetzt.

Weiterhin ist üblicherweise herstellungsbedingt am Dichtelement ein Angusspunkt zu erkennen, welcher insbesondere als ein radial abstehender Angussdom ausgebildet ist.

Im Vergleich zu dem aus dem Stand der Technik bekannten separaten Anbringen eines Dichtelements, welches zudem auch zweiteilig ausgebildet ist, liegt der besondere Vorteil des hier beschriebenen Verfahrens in einer deutlichen Vereinfachung bei der Montage und der Herstellung: Es ist kein separates manuelles Einlegen oder Anbringen des Dichtelements erforderlich. Vielmehr erfolgt dies im Rahmen des zweistufigen Gießprozesses. Dieser kann insbesondere auch in einfacher Weise automatisiert werden. Bevorzugt erfolgt der Gießprozess auch vollautomatisch. Nach dem Schließen der Gussform wird also sowohl die Abdichtung als auch der Tüllenkörper durch zwei vollautomatisiert durchgeführte Injektionen an Dichtmaterial ausgebildet.

Sofern vorliegend von Gießen gesprochen wird, so wird hierunter allgemein das Einbringen eines viskosen Materials in die Gussform beispielsweise durch Spritzen oder Gießen verstanden. Nach dem Einbringen kann dabei das eingebrachte Material, beispielsweise durch Aushärten, Trocknen oder auch Aufschäumen seine Konsistenz und seinen Zustand ändern. Speziell handelt es sich bei dem ausgebildeten Tüllenkörper vorzugsweise um einen geschäumten Körper.

In bevorzugter Ausgestaltung sind allgemein zwei in Axialrichtung gegenüberliegende Dichtelemente ausgebildet, die den Tüllenkörper also beidseitig in Axialrichtung begrenzen und damit in Axialrichtung zu beiden Seiten für eine gute Abdichtung sorgen. Die beiden gegenüberliegenden Dichtelemente sind dabei vorzugsweise gleichartig und insbesondere identisch ausgebildet. Die Dichtelemente begrenzen den Tüllenkörper allgemein bevorzugt lediglich in Axialrichtung und nicht in Radialrichtung.

**In** bevorzugter Ausgestaltung sind die beiden Dichtmaterialien verschieden, wobei das erste Dichtmaterial insbesondere eine höhere Viskosität als das zweite Dichtmaterial aufweist. Insbesondere weist das erste Dichtmaterial eine pastöse Konsistenz auf. Das zweite Dichtmaterial ist demgegenüber flüssiger ausgebildet und weist beispielsweise eine wasserähnliche Konsistenz auf. Durch die unterschiedlichen Viskositäten, insbesondere die höhere Viskosität des ersten Dichtmaterials, lässt sich eine gute Abdichtung erreichen und ein unerwünschtes Fließen des zweiten Dichtmaterials in Axialrichtung durch das ausgebildete Dichtelement hindurch verhindern.

Bevorzugt weist dabei das erste Dichtmaterial eine Viskosität auf, die vorzugsweise um zumindest den Faktor 10, weiter bevorzugt um zumindest den Faktor 100 oder auch um zumindest den Faktor 1000 höher als die des zweiten Dichtmaterials ist (jeweils bezogen auf die Raumtemperatur).

Die Viskosität des ersten Dichtmaterials liegt beispielsweise im Bereich zwischen 1*10² Pas bis 5*10³ Pas bezogen auf eine Verarbeitungstemperatur im Bereich von 50°C bis 200°C, speziell liegt die Viskosität beispielsweise im Bereich zwischen 5*10² Pas bis 2*10³ Pas bezogen auf eine Verarbeitungstemperatur von 100°. Bei 25°C liegt die Viskosität vorzugsweise allgemein bei über 2*10³ Pas.

Alternativ ist - je nach Materialwahl - die Viskosität des ersten Materials geringer und liegt beispielsweise zwischen 4*10² Pas bis 1*10³ Pas bei einer Temperatur von 25°C.

Die Viskosität des zweiten Dichtmaterials liegt beispielsweise demgegenüber lediglich bei 1 Pas bei 25°C.

Als erstes Dichtmaterial ist bevorzugt ein Elastomer oder ein Kautschuk verwendet und insbesondere wird eine Butylkautschuk verwendet. Das erste Dichtmaterial ist daher insgesamt zähelastisch oder zähflüssig und insbesondere gummielastisch ausgebildet.

Um das erste Dichtmaterial zuverlässig insbesondere auch in Zwischenräume zwischen den Einzelleitungen einzubringen ist in bevorzugter Ausgestaltung weiterhin vorgesehen, dass das Dichtmaterial mit Überdruck in die Gussform eingepresst wird. Der Druck ist hierbei insbesondere >0,5 MPa, vorzugsweise > 1 MPa und liegt beispielsweise im Bereich bis 5 MPa oder auch bis 10 MPa. Insbesondere liegt der Druck beispielsweise bei 4 MPa.

Ergänzend oder alternativ ist für ein zuverlässiges Eindringen des ersten Dichtmaterials in bevorzugter Weiterbildung vorgesehen, dass das erste Dichtmaterial für das Einbringen in die Gussform auf einen Temperaturbereich zwischen 50 °C und 200 °C und insbesondere auf eine Temperatur im Bereich zwischen 80 °C und 160 °C erwärmt wird. Das erste Dichtmaterial wird also mit der angegebenen erhöhten Temperatur in die Gussform eingepresst.

Als zweites Dichtmaterial wird bevorzugt ein thermoplastisches Elastomer und insbesondere ein Polyurethan verwendet.

Bevorzugt bildet die Gussform eine Außenschale der Tülle aus und verbleibt als Teil der Tülle am Leitungsstrang. Die Gussform selbst besteht dabei typischerweise aus einem härteren Material im Vergleich zu den beiden Dichtmaterialien. Insbesondere besteht die Gussform aus einem harten Kunststoff.

Alternativ wird die Gussform nach dem Gießprozess wieder entfernt.

Die Gussform weist insbesondere Befüllöffnungen für das erste und das zweite Dichtmaterial auf. Im gefertigten Zustand sind diese insbesondere auch mit dem jeweiligen Dichtmaterial gefüllt. Insbesondere mündet zumindest eine Befüllöffnung in den Ringkanal und zumindest eine weitere Befüllöffnung in den Hauptraum.

Über die harte Außenschale ist eine mechanische Belastung der Tülle ermöglicht. Insbesondere dient die Außenschale zur mechanischen Befestigung an einer Durchgangsöffnung, durch die der Leitungsstrang dicht hindurchgeführt werden soll.

Allgemein setzt sich die Gussform vorzugsweise aus zwei Halbschalen zusammen, die miteinander insbesondere formschlüssig und beispielsweise durch Rastelemente verbunden sind.

**In** bevorzugter Ausgestaltung weist die Gussform in einer Trennebene zwischen den Halbschalen zumindest eine und vorzugsweise mehrere, insbesondere gegenüberliegende Öffnungen auf, die nach dem Gießprozess mit Dichtmaterial angefüllt sind. Bei dieser zumindest einen Öffnung oder bei zumindest einer der mehreren Öffnungen handelt es sich beispielsweise um eine Befüllöffnung. Alternativ handelt es sich gerade nicht um eine Befüllöffnung, sondern beispielsweise um eine Austrittsöffnung, über die Dichtmaterial aus dem Inneren der Gussform eindringen und insbesondere in einen Außenraum außerhalb der Gussform austreten kann. Das in den Öffnungen befindliche Dichtmaterial und insbesondere auch das in den Außenraum ausgetretene Dichtmaterial bildet daher bevorzugt mit dem Dichtmaterial, speziell mit dem zweiten Dichtmaterial im Inneren der Gussform einen monolithischen Dichtkörper.

Das in den Öffnungen befindliche Dichtmaterial weist den besonderen Vorteil auf, dass durch dieses Dichtmaterial eine Abdichtung in Längsrichtung, d.h. eine Längsabdichtung im Bereich der Trennebene ausgebildet ist. Diese Abdichtung ist daher quasi senkrecht zu der Wandung der beiden Halbschalen orientiert und bildet damit eine Sperre für einen Kaviationspfad bzw. einen Kapillareffektpfad, so dass kein Wasser in Längsrichtung die Tülle durchdringen kann. Dadurch ist also die Längswasserdichtheit verbessert.

**In** bevorzugter Ausgestaltung ist die Gussform beim Herstellen des zumindest einen Dichtelements weiterhin in einer zusätzlichen Werkzeugform aufgenommen, welche insbesondere dazu ausgelegt ist, die beim Gießprozess auftretenden radialen Kräfte aufzunehmen und dafür zu sorgen, dass die beiden Halbschalen der Gussform insbesondere beim Einpressen des ersten Dichtmaterials nicht auseinandergedrückt werden. Die Werkzeugform ist daher insbesondere derart ausgelegt, dass sie den oben genannten hohen Drücken standhält. Für diese Werkzeugform kann wiederum ein geeigneter Kunststoff, wie beispielsweise Polypropylen oder auch ein Metall, beispielsweise Aluminium verwendet werden.

Unabhängig oder ergänzend zu dieser zuvor genannten Eigenschaft der Werkzeugform bildet diese bevorzugt über einen axialen Teilbereich einen äußeren Ringkanal aus, welcher die Gussform umgibt. Dieser äußere Ringkanal wird ebenfalls mit Dichtmaterial ausgefüllt, sodass eine äußere Ringdichtung ausgebildet wird. Diese Ringdichtung liegt dabei insbesondere an einem radial abstehenden Ringflansch der Gussform an. Die äußere Ringdichtung dient beispielsweise zur axialen und / oder radialen Abdichtung und wird bei montierter Tülle insbesondere gegen einen Rand der Durchtrittsöffnung / Wandöffnung gepresst, durch die der Leitungsstrang geführt ist.

Der äußere Ringkanal ist bevorzugt zwischen der Werkzeugform und der Gussform ausgebildet, wird also einerseits von der Werkzeugform und andererseits von der Gussform begrenzt
Die Ringdichtung bildet zusammen mit dem Tüllenkörper vorzugsweise einen monolithischen Dichtkörper aus. Beim Gießprozess wird daher der Ringkanal und der Hauptraum beim zweiten Gießschritt mit dem zweiten Dichtmaterial gemeinsam gefüllt. Bevorzugt tritt das zweite Dichtmaterial beim zweiten Gießschritt dabei von innen nach außen in den äußeren Ringkanal über geeignete Öffnungen, insbesondere über nachfolgend als Überströmöffnungen bezeichnete Öffnungen über. Diese sind vorzugsweise umlaufend um die Gussform verteilt.

Bevorzugt weist die Gussform zumindest eine und vorzugsweise mehrere Überströmöffnungen auf, die den Hauptraum zum Ringraum verbinden. Beim Gießprozess tritt daher aus dem Hauptraum das zweite Dichtmaterial in den Ringraum aus, sodass die äußere Ringdichtung ausgebildet wird.

In zweckdienlicher Ausgestaltung ist der zumindest eine Ringkanal in Axialrichtung durch zumindest einen Steg und vorzugsweise durch zwei randseitige, in Axialrichtung gegenüberliegende Stege begrenzt. Durch diese randseitigen Stege wird eine klare Konturierung des Dichtelements erreicht.

In bevorzugter Ausgestaltung ist der zumindest eine Steg und sind vorzugsweise beide Stege auf einen Durchmesser des Leitungsstrangs derart abgestimmt, dass sie diesen radial zusammenpressen. Allgemein ist im Bereich des Ringkanals der Leitungsstrang radial komprimiert. Im Bereich des Ringkanals wird daher das Leitungsbündel quasi verdichtet. Das Leitungsbündel wird an dieser Stelle im Vergleich zu den zum Ringkanal benachbarten Stellen verformt und eingedrückt, weist also dort einen geringeren Durchmesser auf als an benachbarten Axialbereichen. Insbesondere wird durch den Ringkanal und die Stege das Leitungsbündel derart verformt, dass sich dort eine umlaufende, ringförmige Nut ausbildet, in die der zumindest eine ringförmig umlaufender Steg eindringt. Durch das Komprimieren im Bereich des Ringkanals und damit im Bereich des Dichtelements wird eine mechanische Fixierung des Leitungsbündels und damit insoweit auch eine Auszugssicherheit in Längsrichtung erreicht. Zudem wird zusätzlich eine verbesserte Längsabdichtung erreicht.

Im komprimierten Bereich (im Bereich des Ringkanals) verläuft zumindest ein Teil der Einzelleitungen gebogen, zumindest Einzelleitungen, die an den Stegen anliegen, also speziell Einzelleitungen einer äußersten Lage. Insbesondere verlaufen diese Einzelleitungen - in einem Längsschnitt betrachtet - in etwa U-förmig gebogen.

Die beiden den Ringkanal begrenzenden Stege weisen bevorzugt eine unterschiedliche (radiale) Höhe auf. Dabei ist insbesondere vorgesehen, dass ein dem Tüllenkörper abgewandter, außenseitiger Steg eine größere Höhe aufweist als ein innenseitiger, dem Tüllenkörper zugewandter Steg. Hierdurch ist die Dichtwirkung weiter verbessert.

Die beiden Halbschalen der Gussform liegen in einer Trennebene an Stirnseiten aneinander an. Zumindest eine der beiden Halbschalen, vorzugsweise beide Halbschalen weisen an dieser Stirnseite vorzugsweise eine Nut auf, die insbesondere entlang des Tüllenkörpers und vorzugsweise auch entlang des zumindest einen Dichtelements entlang verläuft. Speziell passt sich der Verlauf der Nut der äußeren Kontur des Tüllenkörpers an, welcher insbesondere einen radial abstehenden Ringflansch ausbildet. Die Nut verläuft daher in etwa labyrinthförmig und kann daher auch als eine Labyrinthnut bezeichnet werden. Diese Nut dient beispielsweise zum Auffangen von Dichtmaterial, welches an der Trennebene in radialer Richtung, aus dem Hauptraum austritt.

Ein Ausführungsbeispiel der Erfindung wird nachfolgend anhand der Figuren näher erläutert. Diese zeigen:
- FIG 1: eine perspektivische Explosionsdarstellung eines Leitungsstrangs mit Tülle sowie mit zusätzlicher Werkzeugform,
- FIG 2: eine Längsschnittdarstellung des Leitungsstrangs mit daran angebrachter Tülle,
- FIG 3: eine perspektivische Darstellung einer Halbschale einer Gussform, die zugleich eine Außenschale der Tülle ausbildet,
- FIG 4: eine Seitenansicht auf eine Außenseite der in der FIG 3 dargestellten Halbschale,
- FIG 5: eine Längsschnittdarstellung eines Leitungsstrangs mit daran angebrachter Tülle gemäß einer weiteren Variante,
- FIG 6: eine perspektivische Darstellung des Leitungsstrangs mit daran angebrachter Tülle gemäß FIG 5, sowie
- FIG 7: eine perspektivische Darstellung einer weiteren Variante des Leitungsstrangs mit daran angebrachter Tülle.

In den Figuren sind gleichwirkende Teile mit den gleichen Bezugszeichen versehen.

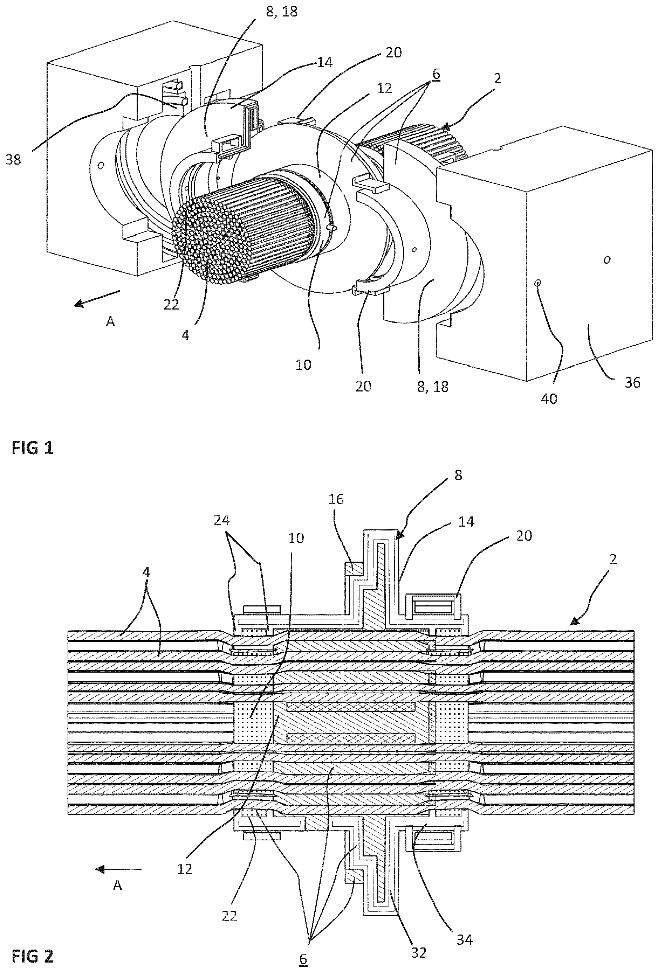

Ein in FIG 1 und FIG 2 dargestellter Leitungsstrang 2 erstreckt sich in Axialrichtung A und weist mehrere Einzelleitungen 4 auf, die im Ausführungsbeispiel in mehreren Lagen angeordnet sind und ein Leitungsbündel bilden. Bei dem Leitungsstrang 2 handelt sich insbesondere um ein elektrisches Kabel und bei den Einzelleitungen handelt es sich um elektrische Leitungen.

An diesem Leitungsstrang 2 ist (vergleiche hierzu insbesondere FIG 2) eine Tülle 6 angebracht. Diese weist als Hauptbestandteile eine Gussform 8, zwei in Axialrichtung A gegenüberliegende Dichtelemente 10 aus einem ersten Dichtmaterial und ein zwischen diesen angeordneten Tüllenkörper 12 aus einem zweiten Dichtmaterial auf. Die Gussform 8 bildet zugleich eine bleibende Außenschale der Tülle 6.

Die beiden Dichtelemente 10 liegen in Axialrichtung A einander gegenüber und begrenzen jeweils die Tülle 6 in Axialrichtung. Die beiden Dichtelemente 10 sind als gegossene, insbesondere scheibenförmige Elemente ausgebildet, die die Einzelleitungen 4 jeweils umschließen, sodass diese durch das jeweilige Dichtelement 10 in Axialrichtung A hindurchtreten.

Die Gussform 8 weist einen radial abstehenden Ringflansch 14 auf. An diesem ist in Axialrichtung A angrenzend eine äußere Ringdichtung 16 ausgebildet. Bevorzugt ist der Ringflansch 14 zumindest und vorzugsweise lediglich an seiner einen axialen Ringfläche, an der die äußere Ringdichtung 16 ausgebildet ist, gestuft ausgebildet. Die äußere Ringdichtung 16 liegt unmittelbar an dieser Stufe an. Der Ringflansch 14 ist vorzugsweise innen hohl ausgebildet.

Die Tülle 6 dient allgemein zur abgedichteten Durchführung des Leitungsstrangs 2 durch eine Durchgangsöffnung in einer Wand. Sie wird hierzu üblicherweise mit dem Ringflansch 14 gegen einen Rand der Durchgangsöffnung, die beispielsweise in einer Trennwand ausgebildet ist, gedrückt. Dabei erfolgt über die äußere Ringdichtung 16 insbesondere eine Abdichtung in Axialrichtung A. Die Tülle 8 ist in einem endmontierten Zustand insbesondere in einem Kraftfahrzeug angebracht.

Die Gussform 8 setzt sich aus zwei Halbschalen 18 zusammen, die im montierten Zustand insbesondere formschlüssig über Rastelemente 20, die beispielsweise als Rasthaken und Rastöffnungen ausgeführt sind, miteinander verbunden sind.

Die Gussform 8 weist an ihren in Axialrichtung A gegenüberliegenden Enden jeweils einen umlaufenden, innenliegenden Ringkanal 22 auf. Dieser ist in Axialrichtung A jeweils durch gegenüberliegende Stege 24 begrenzt, die in radialer Richtung abstehen und insgesamt jeweils einen umlaufenden Ringsteg ausbilden.

Zwischen den beiden Ringkanälen 22 ist ein Hauptraum 26 ausgebildet.

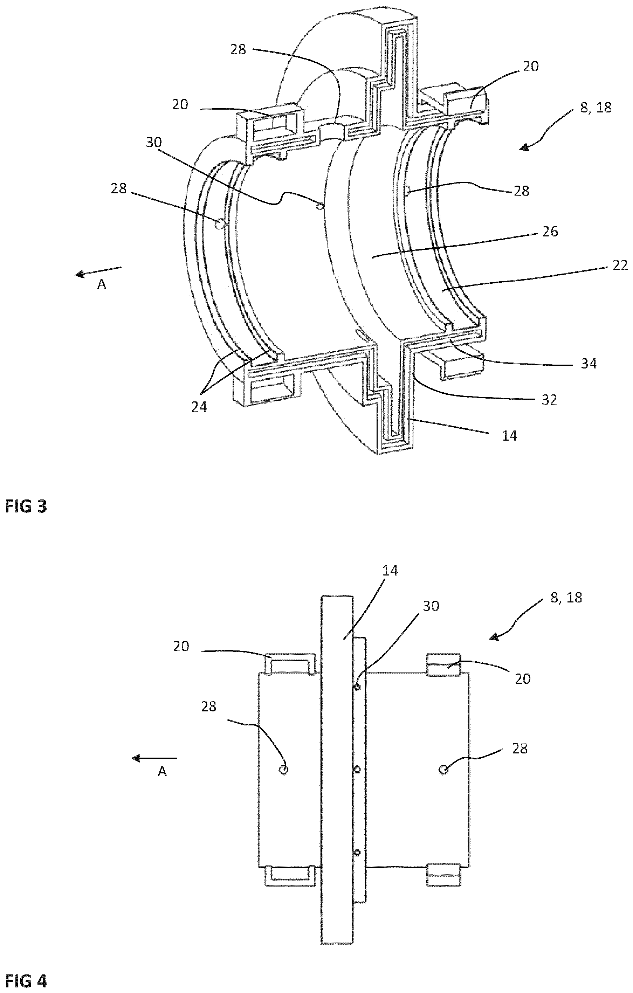

Die Gussform 8 weist weiterhin mehrere Befüllöffnungen 28 auf. So weist vorzugsweise jede Halbschale 18 jeweils eine Befüllöffnung 28 auf, die in den jeweiligen Ringkanal 22 mündet. Weiterhin ist zumindest eine weitere Befüllöffnung 28 ausgebildet, die in den Hauptraum 28 mündet. Bevorzugt ist diese in einer Trennebene zwischen den beiden Halbschalen 18 ausgebildet (vergleiche hierzu insbesondere auch FIG 3).

Neben diesen Befüllöffnungen 28 sind weitere Überströmöffnungen 30 ausgebildet, die eine Verbindung vom Hauptraum 28 zu einem Außenraum radial außerhalb der Gussform 8 ausbilden und zwar insbesondere zu einem Außenraum seitlich angrenzend zum Ringflansch 14. Speziell münden die Überströmöffnungen 30 an der zuvor beschriebenen Stufe in den Außenraum.

Wie insbesondere anhand der FIG 3 gut zu erkennen ist, ist innerhalb der Trennebene der beiden Halbschalen 18, an denen diese mit Stirnseiten 32 aneinander anliegen, eine (Labyrinth-) Nut 34 ausgebildet. Diese folgt insbesondere der Außenkontur der jeweiligen Halbschalen 18, verläuft also jeweils innerhalb der Wandung der jeweiligen Halbschalen 18 an deren Stirnseite 32.

Zur Herstellung der Tülle 6 wird weiterhin eine Werkzeugform 36 herangezogen, die wiederum vorzugsweise aus zwei Werkzeughälften gebildet ist (vgl. FIG 1). Die Werkzeugform 36 nimmt beim nachfolgend beschriebenen Gießprozess die Gussform 8 auf und bildet ein insbesondere radiales Widerlager für die Gussform aus. Die beiden Werkzeughälften weisen bevorzugt jeweils eine Aufnahme auf, deren Kontur an die Außenkontur der Gussform 8 angepasst ist. Speziell weisen die Werkzeughälften radiale Anlageflächen auf, die komplementär zu den radialen Außenflächen der Gussform 8 ausgebildet sind, sodass beim Gießprozess ein flächiger Kontakt ausgebildet ist. Die Werkzeugform 36 bildet weiterhin einen äußeren Ringkanal 38 aus, welcher - im Zusammenwirken mit der Außenkontur der Gussform 8 - zur Ausbildung der äußeren Ringdichtung 16 dient. Weiterhin weist die Werkzeugform 36 mehrere Befüllkanäle 40 auf, die beim Gießprozess mit den Befüllöffnungen 26 fluchten und mit diesen verbunden sind.

Bei der Herstellung und der Anbringung der Tülle 6 am Leitungsstrang 2 wird wie folgt vorgegangen:
Die beiden Halbschalen 18 werden am Leitungsstrang 2 angebracht. Hierzu werden die beiden Halbschalen 18 über die Rastelemente 20 mechanisch miteinander verbunden. Bevorzugt wird ergänzend noch die Werkzeugform 32 angebracht, welche die Gussform 8 aufnimmt. Die Werkzeughälften werden bevorzugt mechanisch gegeneinander in hier nicht näher dargestellter Weise verspannt.

Im Bereich der Ringkanäle 22 pressen die Stege 24 das Leitungsbündel 2 radial zusammen und komprimieren dies. Es bildet sich dadurch am Außenumfang des Leitungsstrangs 2 eine umlaufende Nut aus. Die Einzelleitungen 4 insbesondere der äußerste Lage werden dabei verformt und verlaufen - im Längsschnitt betrachtet - insbesondere in etwa U-förmig.

Nachfolgend beginnt der eigentliche zweistufige Gießprozess. Zunächst werden die beiden Ringkanäle 22 mit dem ersten Dichtmaterial befüllt und es werden die beiden gegenüberliegenden Dichtelemente 10 ausgebildet. Als erstes Dichtmaterial wird hierbei bevorzugt ein Butylkautschuk eingesetzt. Dieser ist beim Verarbeiten zähflüssig und beispielsweise pastös. Das erste Dichtmaterial wird hierbei unter hohem Druck von beispielsweise 4MPa und bei hoher Temperatur im Bereich beispielsweise von 80 °C bis 160 °C in die Gussform 8 eingepresst. Dadurch wird das erste Dichtmaterial im Bereich des Ringkanals 22 zwischen die Einzelleitungen 4 eingepresst und es bildet sich jeweils das vorzugsweise in etwa scheibenförmigen Dichtelement 10 aus, durch das die Einzelleitungen 4 vorzugsweise jeweils einzelweise hindurchtreten. Das erste Dichtmaterial dringt dabei bevorzugt über die gesamte radiale Abmessung des Leitungsstrangs 2 in diesen ein. Das über die Befüllöffnungen 28 eingepresste erste Dichtmaterial fließt entlang des Ringkanals 22 um die Einzelleitungen 4 herum und dringt gleichzeitig auch in radialer Richtung zwischen die Einzelleitungen 4 ein

Durch den hohen Einpressdruck wirken auf die Gussform 8 erhebliche radiale Druckkräfte ein, die von der Werkzeugform 26 aufgenommen werden.

Nach dem Ausbilden der Dichtelemente 10 wird anschließend in einer zweiten Stufe das zweite Dichtmaterial, insbesondere ein PUR in den Hauptraum 26 eingebracht und füllt diesen vollständig aus. Das zweite Dichtmaterial weist beispielsweise eine wässrige Konsistenz auf und dringt somit problemlos in die Zwischenräume zwischen die Einzelleitungen 4 ein. Durch die zuvor ausgebildeten Dichtelemente 10 ist eine Längsabdichtung für das zweite Dichtmaterial zuverlässig erreicht. Je nach Art des zweiten Dichtmaterials kann dieses auch aufschäumen.

Das zweite Dichtmaterial tritt in der zweiten Stufe des Gießprozesses darüber hinaus über die Überströmöffnungen 30 nach außen in den äußeren Ringkanal 38 aus und bildet dort die äußere Ringdichtung 16 aus.

Die Tülle 6 weist aufgrund des speziellen zweistufigen Gießvorgangs einige charakteristische Merkmale insbesondere im Bereich der Dichtelemente 10 auf. Zum einen weist das jeweilige Dichtelement 10 jeweils zumindest einen und bevorzugt mehrere domartige Anspritzpunkte auf, die durch das erste Dichtmaterial ausgebildet sind und die die jeweiligen Befüllöffnungen 28 ausfüllt.

Weiterhin sind am Außenumfang des Leitungsstrangs 2 das Dichtelement 10 und der Tüllenkörper 12 voneinander über eine Trennfuge getrennt, wobei in dieser Trennfuge der innenseitige Steg 24 einliegt. Im Unterschied hierzu liegen radial weiter innen das Dichtelement 10 und der Tüllenkörper 12 unmittelbar aneinander an. Bevorzugt gehen Sie in diesem radial inneren Bereich eine stoffschlüssige Verbindung ein. Im Bereich der Stege 24 liegen die Einzelleitungen radial außen vorzugsweise frei, sind also nicht von Gussmaterial umgeben.

Insgesamt ist durch den hier beschriebenen zweistufigen Gießprozess eine herstellungstechnisch einfache Ausbildung und Anbringung der Tülle 6 am Leitungsstrang 2 ermöglicht. Insbesondere erfolgt der Gießprozess vollautomatisch. Das separate Anbringen von Dichtelementen ist daher nicht erforderlich. Zudem ist durch das Einpressen des ersten Dichtmaterials unter hohem Druck eine gute Abdichtung in Axialrichtung A erreicht.

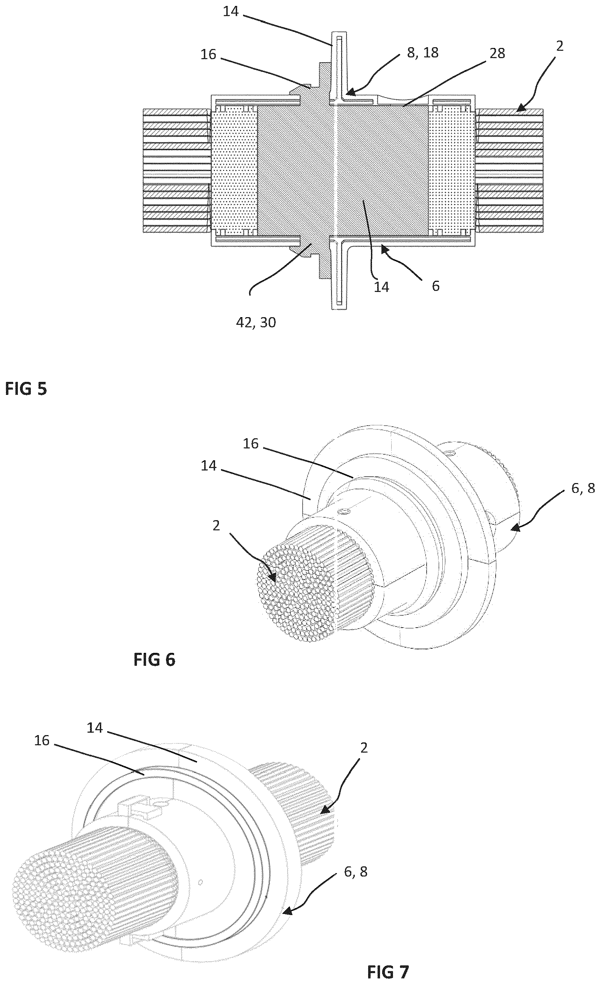

Die in FIG 5 sowie FIG 6 dargestellte Ausführungsvariante eines mit der Tülle 6 versehenen Leitungsstrangs 2 ist vergleichbar zu der Variante gemäß der FIG 2 aufgebaut. Insofern wird auf die Beschreibung der FIG 2 verwiesen.

FIG 5 zeigt eine Ansicht auf eine der beiden Halbschalen 18 der Gussform 8 und insofern auf die Trennebene zwischen den beiden Halbschalen 18. Neben der (weiteren) Befüllöffnung 28 zum Befüllen des Hauptraums 26 mit dem zweiten Dichtmaterial weist die Gussform 8 innerhalb der Trennebene liegende Öffnungen 42 auf, die Austrittsöffnungen bilden, durch welche das zweite Dichtmaterial von innen nach außen hindurchtreten kann. Speziell handelt es sich bei dieser Ausführungsvariante bei diesen Öffnungen 42 zugleich um die zuvor beschriebenen Überströmöffnungen 30, sodass das aus diesen Öffnungen 42 austretende zweite Dichtmaterial an der Außenseite der Gussform 8 die äußere Ringdichtung 16 ausbildet. Die dadurch gebildete Ringdichtung 16 bildet zusammen mit dem Tüllenkörper 12 einen monolithischen Dichtkörper, welcher im zweiten Gießschritt durch das zweite Dichtmaterial erzeugt wird.

Dadurch dass die Öffnungen 42 in der Trennebene liegen, ist durch das in diesen Öffnungen 42 eingedrungene Dichtmaterial eine Längsdichtung an der Kontaktfläche zwischen den beiden Halbschalen 18 ausgebildet. Allgemein greifen die beiden Halbschalen 18 vorzugsweise nach Art eines Nut- und Federprinzips ineinander. Durch diese Längsdichtung wird daher die Längswasserdichtigkeit zusätzlich verbessert und es wird insbesondere vermieden, dass entlang dieser Kontaktflächen Wasser in Längsrichtung beispielsweise aufgrund von Kapillareffekten hindurchtreten kann.

Im Ausführungsbeispiel der Figuren 5 und 6 ist die Ringdichtung 16 insbesondere als eine radiale Dichtung ausgebildet, die also den mit der Tülle 8 versehenen Leitungsstrang 2 in radialer Richtung beispielsweise gegen einen Randbereich eines Wanddurchbruches abdichtet. Hierzu ist die Ringdichtung 16 - wie aus FIG 5 zu entnehmen ist - beispielsweise mit einer umlaufenden Ringnut versehen, in die der umlaufende Rand des Wanddurchbruches eintauchen kann.

Bei der weiteren Ausführungsvariante gemäß FIG 7 ist im Unterschied zu der Ausführungsvariante gemäß den Figuren 5 und 6 die äußere Ringdichtung 16 als eine axiale Dichtung ausgebildet. Diese ist hierzu nach Art eines O-Rings ausgebildet und liegt - ebenso wie bei der Ausführungsvariante gemäß Figuren 5 und 6 - am Ringflansch 14 an und ist insbesondere in radialer Richtung beabstandet von einem typischerweise zylindrischen Zentralteil der Gussform 8 angeordnet.

### Bezugszeichenliste

- 2: Leitungsstrang
- 4: Einzelleitungen
- 6: Tülle
- 8: Gussform
- 10: Dichtelement
- 12: Tüllenkörper
- 14: Ringflansch
- 16: äußere Ringdichtung
- 18: Halbschalen
- 20: Rastelemente
- 22: Ringkanal
- 24: Steg
- 26: Hauptraum
- 28: Befüllöffnung
- 30: Überströmöffnung
- 32: Stirnseite
- 34: Nut
- 36: Werkzeugform
- 38: äußerer Ringkanal
- 40: Befüllkanal
- 42: Öffnung

- A: Axialrichtung

## Patentansprüche

1. Verfahren zur Anbringung einer Tülle (6) an einem sich in einer Axialrichtung (A) erstreckenden Leitungsstrang (2) mit mehreren Einzelleitungen, mit folgenden Schritten:
- Anbringen einer Gussform (8) um den Leitungsstrang (2), wobei die Gussform (8) einen Hauptraum (26) sowie in Axialrichtung (A) angrenzend zumindest einen Ringkanal (22) aufweist,
sowie weiterhin in einem zweistufigen Gussverfahren
- Ausbildung eines Dichtelements (10) mit Hilfe eines ersten Dichtmaterials, welches in den Ringkanal (22) der Gussform (8) eingebracht wird,
- nachfolgendes Füllen das Hauptraums (26) und Ausbilden eines Tüllenkörpers (12) durch Einbringen eines zweiten Dichtmaterials in die Gussform (8), wobei das zuvor ausgebildete Dichtelement (10) eine Längsabdichtung für das zweite Dichtmaterial in Axialrichtung (A) bewirkt.

2. Verfahren nach dem vorhergehenden Anspruch, bei dem die beiden Dichtmaterialien verschieden sind, wobei das erste Dichtmaterial insbesondere eine höhere Viskosität als das zweite Dichtmaterial aufweist und / oder bei dem als erstes Dichtmaterial ein Elastomer oder Kautschuk verwendet wird und insbesondere ein Butylkautschuk verwendet wird.

3. Verfahren nach einem der vorhergehenden Ansprüche, bei dem das erste Dichtmaterial unter Druck in die Gussform (8) eingepresst wird, wobei der Druck größer 0,5MPa und insbesondere größer 1 MPa ist, und / oder bei dem das erste Dichtmaterial für das Einbringen in die Gussform (8) auf eine Temperatur im Bereich zwischen 50°C und 200°C und insbesondere 80°C und 160°C erwärmt wird.

4. Verfahren nach einem der vorhergehenden Ansprüche, bei dem als zweites Dichtmaterial ein thermoplastisches Elastomer, insbesondere ein Polyurethan verwendet wird.

5. Verfahren nach einem der vorhergehenden Ansprüche, bei dem die Gussform (8) eine Außenschale ausbildet und als Teil der Tülle (6) am Leitungsstrang (2) verbleibt.

6. Verfahren nach einem der vorhergehenden Ansprüche, bei dem die Gussform (8) in einer Werkzeugform (36) aufgenommen ist, die beim Gießprozess auftretende Radialkräfte aufnimmt.

7. Verfahren nach dem vorhergehenden Anspruch, bei dem die Werkzeugform (36) einen äußeren Ringkanal (38) aufweist, welcher die Gussform (8) umgibt und mit Dichtmaterial angefüllt wird zur Ausbildung einer Ringdichtung (16), wobei das Dichtmaterial der Ringdichtung (16) zusammen mit dem Tüllenkörper (12) bevorzugt einen monolithischen Dichtkörper ausbildet.

8. Verfahren nach einem der vorhergehenden Ansprüche, bei der der zumindest eine Ringkanal (22) durch zwei randseitige Stege (24) begrenzt ist, die den Leitungsstrang (2) radial zusammenpressen.

9. Leitungsstrang (2) mit daran angebrachter Tülle (6), der sich in Axialrichtung (A) erstreckt, wobei die Tülle (6) zumindest ein an den Leitungsstrang (2) angegossenes Dichtelement (10) aus einem ersten Dichtmaterial und einen sich in Axialrichtung (A) daran anschließenden, gegossenen Tüllenkörper (12) aus einem zweiten Dichtmaterial aufweist.

10. Leitungsstrang (2) nach dem vorhergehenden Anspruch, wobei die Tülle (6) eine Außenschale aufweist, die als bleibende Gussform (8) ausgebildet ist, in der das zumindest eine Dichtelement (10) und der Tüllenkörper (12) durch einen Gießprozess ausgebildet sind, wobei die Gussform (8) Befüllöffnungen (28) für das erste und das zweite Dichtmaterial aufweist.

11. Leitungsstrang (2) nach einem der beiden vorhergehenden Ansprüche, wobei die Gussform (8) einen Ringkanal (22) aufweist, in dem das Dichtelement (10) aufgenommen ist, wobei der Ringkanal (22) in Axialrichtung (A) durch zumindest einen Steg und vorzugsweise durch zumindest zwei in Axialrichtung (A) gegenüberliegende Stege (24) begrenzt ist, wobei die Stege (24) vorzugsweise unterschiedliche Höhen aufweisen.

12. Leitungsstrang (2) nach dem vorhergehenden Anspruch, wobei im Bereich des Ringkanals (22) der Leitungsstrang (2) radial komprimiert ist.

13. Leitungsstrang (2) nach einem der Ansprüche 9 bis 12, wobei die Gussform (8) aus zwei Halbschalen (18) ausgebildet ist und die Halbschalen (18) in einer Trennebene an Stirnseiten (32) aneinander anliegen und zumindest eine der Halbschalen (18) an der Stirnseite (32) eine Nut (34) ausbildet.

14. Leitungsstrang (2) nach dem vorhergehenden Anspruch, bei dem die Gussform (8) in der Trennebene zumindest eine mit Dichtmaterial angefüllte Öffnung (42) aufweist.

15. Leitungsstrang nach einem der Ansprüche 9 bis 14, bei dem außerhalb der Gussform (8) an dieser anliegend eine Ringdichtung (16) ausgebildet ist, die insbesondere durch das zweite Dichtmaterial des Tüllenkörpers (12) ausgebildet ist und mit dem Tüllenkörper (12) insbesondere einen monolithischen Dichtkörper aus dem zweiten Dichtmaterial bildet.

## Claims

1. A method for attaching a grommet (6) on a cable bundle (2) with several individual cables, extending in an axial direction (A), with the following steps:
- attaching a casting mold (8) about the cable bundle (2), wherein the casting mold (8) has a main space (26) as well as at least one adjacent annular channel (22) in the axial direction (A),
as well as in a two-stage casting process
- forming a sealing element (10) using a first sealing material which is introduced into the annular channel (22) of the casting mold (8),
- subsequent filling of the main space (26) and forming a grommet body (12) by introducing a second sealing material into the casting mold (8), wherein the previously formed sealing element (10) ensures a longitudinal sealing for the second sealing material in the axial direction (A).

2. The method according to the preceding claim, in which the two sealing materials are different, wherein the first sealing material in particular has a higher viscosity than the second sealing material and/or in which an elastomer or rubber is used as the first sealing material and in particular a butyl rubber is used.

3. The method according to any one of the preceding claims, in which the first sealing material is pressed under pressure into the casting mold (8), wherein the pressure is greater than 0.5 MPa and in particular greater than 1 MPa, and/or in which, for the introduction into the casting mold (8), the first sealing material is heated to a temperature in a range between 50 °C and 200 °C, and in particular 80 °C and 160 °C,

4. The method according to any one of the preceding claims, in which a thermoplastic elastomer, in particular a polyurethane, is used as a second sealing material.

5. The method according to any one of the preceding claims, in which the casting mold (8) forms an outer shell and remains on the cable bundle (2) as part of the grommet (6).

6. The method according to any one of the preceding claims, in which the casting mold (8) is received in a tool mold (36), which absorbs radial forces occuring during the casting process.

7. The method according to the preceding claim, in which the tool mold (36) has an external annular channel (38) which surrounds the casting mold (8) and is filled with sealing material for the formation of an annular seal (16), wherein the sealing material of the annular seal (16) preferably forms a monolithic sealing body, together with the grommet body (12).

8. The method according to any one of the preceding claims, in which the at least one annular channel (22) is delimited by two peripheral rims (24) which radially compress the cable bundle (2).

9. A cable bundle (2) with a grommet (6) attached thereon, which extends in the axial direction (A), wherein the grommet (6) comprises at least one sealing element (10), casted onto the cable bundle (2), of a first sealing material and a casted grommet body (12) of a second sealing material, connecting thereto in the axial direction (A).

10. The cable bundle (2) according to the preceding claim, wherein the grommet (6) has an outer shell which is formed as a permanent casting mold (8), in which the at least one sealing element (10) and the grommet body (12) are formed by a casting process, wherein the casting mold (8) comprises filling openings (28) for the first and the second sealing material.

11. The cable bundle (2) according to one of both preceding claims, wherein the casting mold (8) has an annular channel (22), in which the sealing element (10) is received, wherein the annular channel (22) is delimited in the axial direction (A) by at least one rim and preferably by at least two opposite rims (24) in axial direction (A), wherein the rims (24) preferably have different heights.

12. The cable bundle (2) according to the preceding claim, wherein, in the area of the annular channel (22), the cable bundle (2) is radially compressed.

13. The cable bundle (2) according to any one of claims 9 to 12, wherein the casting mold (8) is formed of two half-shells (18) and the half-shells (18) abut each other in a separation plane at the front faces (32) and at least one of the half-shells (18) forms a groove (34) at the front face (32).

14. The cable bundle (2) according to the preceding claim, in which the casting mold (8) in the separation plane has at least one opening (42), filled with sealing material.

15. The cable bundle according to any one of claims 9 to 14, in which outside the casting mold (8), and adjacent to it, an annular seal (16) is formed, which is formed in particular by the second sealing material of the grommet body (12) and constitutes with the grommet body (12) in particular a monolithic sealing body of the second sealing material.

## Revendications

1. Procédé pour la mise en place d'un passe-câbles (6) sur un faisceau de câbles (2) comportant plusieurs câbles individuels, s'étendant dans une direction axiale (A), comportant les étapes suivantes :
- mise en place d'un moule de coulée (8) autour du faisceau de câbles (2), le moule de coulée (8) présentant un espace principal (26) ainsi qu'au moins un canal annulaire (22) adjacent en direction axiale (A),
ainsi qu'en outre dans un procédé de moulage en deux étapes
- formation d'un élément d'étanchéité (10) à l'aide d'un premier matériau d'étanchéité qui est introduit dans le canal annulaire (22) du moule de coulée (8),
- remplissage subséquent de l'espace principal (26) et formation d'un corps (12) de passe-câbles par introduction d'un deuxième matériau d'étanchéité dans le moule de coulée (8), l'élément d'étanchéité (10) formé précédemment assurant une étanchéité longitudinale pour le deuxième matériau d'étanchéité en direction axiale (A).

2. Procédé selon la revendication précédente, dans lequel les deux matériaux d'étanchéité sont différents, le premier matériau d'étanchéité présentant en particulier une viscosité plus élevée que le deuxième matériau d'étanchéité et/ou dans lequel est utilisé comme premier matériau d'étanchéité un élastomère ou caoutchouc et en particulier est utilisé un caoutchouc butyle.

3. Procédé selon l'une quelconque des revendications précédentes, dans lequel le premier matériau d'étanchéité est introduit sous pression dans le moule de coulée (8), la pression étant supérieure à 0,5 MPa et en particulier supérieure à 1 MPa, et/ou dans lequel, pour l'introduction dans le moule de coulée (8), le premier matériau d'étanchéité est chauffé à une température dans la plage entre 50 °C et 200 °C, et en particulier entre 80 °C et 160 °C,

4. Procédé selon l'une quelconque des revendications précédentes, dans lequel est utilisé comme deuxième matériau d'étanchéité un élastomère thermoplastique, en particulier un polyuréthane.

5. Procédé selon l'une quelconque des revendications précédentes, dans lequel le moule de coulée (8) forme une coque externe et reste en tant que partie du passe-câbles (6) sur le faisceau de câbles (2).

6. Procédé selon l'une quelconque des revendications précédentes, dans lequel le moule de coulée (8) est reçu dans un moule-outil (36) qui absorbe les forces radiales apparaissant lors du processus de coulée.

7. Procédé selon la revendication précédente, dans lequel le moule-outil (36) comporte un canal annulaire externe (38) qui entoure le moule de coulée (8) et est rempli de matériau d'étanchéité pour la formation d'un joint d'étanchéité annulaire (16), le matériau d'étanchéité du joint d'étanchéité annulaire (16) formant de préférence un corps d'étanchéité monolithique conjointement avec le corps (12) de passe-câble.

8. Procédé selon l'une quelconque des revendications précédentes, dans lequel ledit au moins un canal annulaire (22) est délimité par deux rebords périphériques (24) qui compriment radialement le faisceau de câbles (2).

9. Faisceau de câbles (2) sur lequel est mis en place un passe-câbles (6) qui s'étend en direction axiale (A), le passe-câbles (6) comportant au moins un élément d'étanchéité (10) moulé sur le faisceau de câbles (2), constitué d'un premier matériau d'étanchéité et d'un corps (12) moulé de passe-câbles, constitué d'un deuxième matériau d'étanchéité, s'y raccordant en direction axiale (A).

10. Faisceau de câbles (2) selon la revendication précédente, dans lequel le passe-câbles (6) comporte une coque externe qui est conçue en tant que moule de coulée permanent (8), dans lequel ledit au moins un élément d'étanchéité (10) et le corps (12) de passe-câbles sont formés par un processus de coulée, le moule de coulée (8) comportant des ouvertures de remplissage (28) pour le premier et le deuxième matériau d'étanchéité.

11. Faisceau de câbles (2) selon l'une quelconque des deux revendications précédentes, dans lequel le moule de coulée (8) comporte un canal annulaire (22), dans lequel est reçu l'élément d'étanchéité (10), le canal annulaire (22) étant délimité en direction axiale (A) par au moins un rebord et de préférence par au moins deux rebords (24) opposés en direction axiale (A), les rebords (24) présentant de préférence des hauteurs différentes.

12. Faisceau de câbles (2) selon la revendication précédente, dans lequel, dans la zone du canal annulaire (22), le faisceau de câbles (2) est comprimé radialement.

13. Faisceau de câbles (2) selon l'une quelconque des revendications 9 à 12, dans lequel le moule de coulée (8) est formé de deux demi-coques (18) et les demi-coques (18) s'appliquent l'une contre l'autre dans un plan de séparation au niveau des faces frontales (32) et au moins l'une des demi-coques (18) forme une rainure (34) au niveau de la face frontale (32).

14. Faisceau de câbles (2) selon la revendication précédente, dans lequel le moule de coulée (8) comporte dans le plan de séparation au moins une ouverture (42) remplie de matériau d'étanchéité.

15. Faisceau de câbles selon l'une quelconque des revendications 9 à 14, dans lequel à l'extérieur du moule de coulée (8) est formé un joint d'étanchéité annulaire (16) s'appliquant sur celui-ci, qui est formé en particulier par le deuxième matériau d'étanchéité du corps (12) de passe-câbles et constitue avec le corps (12) de passe-câbles en particulier un corps d'étanchéité monolithique constitué du deuxième matériau d'étanchéité.
